# FASCICULE DE BREVET EUROPEEN

(11) **EP 0 710 441 B1**
(45) Date de publication et mention de la délivrance du brevet: **12.05.1999**
(21) Numéro de dépôt: 95440074.3
(22) Date de dépôt: 03.11.1995
(51) Int. Cl.: A21B 1/26, A21B 1/42

(54) **Four à cuisson continue de produits de boulangerie, viennoiserie, pâtisserie et analogues**
Bäckereiofen zum kontinuierlichen Kochen von Back- oder Konditorwaren oder ähnlichen
Bakers' oven for continuous cooking of bakery or pastry products or the same

(30) Priorité: 07.11.1994 FR 9413506
(43) Date de publication de la demande: 08.05.1996
(73) Titulaire: Mecatherm, Société Anonyme, 67130 Schirmeck (FR)
(72) Inventeur: Voegtlin, René, F-67025 Oberhausbergen (FR)
(74) Mandataire: Rhein, Alain

(56) Documents cités:
- WO-A-82/02475
- WO-A-90/06057
- US-A- 2 897 772
- US-A- 3 802 832
- US-A- 3 830 624
- US-A- 3 908 533
- US-A- 4 120 646

## Description

L'invention a trait à un four à cuisson continue de produits de boulangerie, viennoiserie, pâtisserie et analogue, comprenant une enceinte de cuisson et des moyens de transport de supports, tels que des plaques, filets ou similaires, sur lesquels sont disposés lesdits produits pour acheminer ceux-ci au travers de l'enceinte de cuisson entre une ouverture d'entrée et une ouverture de sortie.

Dans le domaine de la boulangerie industrielle, le matériel utilisé doit être à même de satisfaire à des cadences de production de plus en plus élevées. Dans cette optique, des fours à cuisson continue ont été élaborés qui, étant effectivement à même de s'adapter aux vitesses de production souhaitées, présentent, par ailleurs, un certain nombre d'inconvénients liés à leur taille et à leur poids.

En fait, de tels fours connus comportent, souvent, une enveloppe isolante de forme parallélépipédique à l'intérieur de laquelle est définie une enceinte de cuisson munie d'une ouverture d'entrée et d'une ouverture de sortie et qui est traversée par des moyens de transport permettant de véhiculer des supports du type plaques, filets ou autres sur lesquels sont disposés les produits à cuire.

Ainsi, certains fours dits fours tunnels, comportent une enceinte de cuisson linéaire traversée par un convoyeur sur lequel sont disposés les supports tels que plaques ou analogues.

L'on connaît également, tout particulièrement au travers du document FR-A-2.045.892, des moyens de transport sous forme d'une ou plusieurs norias disposées à l'intérieur de l'enceinte de cuisson. Cette ou ces norias sont équipées de bras supports sur lesquels prennent position lesdites plaques pour assurer leur transfert depuis l'ouverture d'entrée jusqu'à l'ouverture de sortie, en leur conférant un mouvement ascendant et/ou descendant à l'intérieur de ladite enceinte de cuisson. Il est tout particulièrement connu par ce document antérieur, une noria composée d'un couple de chaînes motorisées et juxtaposées, décrivant un circuit bouclé en définissant un brin de chaîne ascendant et un brin de chaîne descendant. Par ailleurs, sur ces chaînes sont fixés, perpendiculairement, des bras supports sur lesquels viennent reposer les plaques de produits à cuire. En raison de cette conception, l'on dispose, à l'intérieur du four, d'une colonne de plaques montantes et d'une colonne de plaques descendantes, sachant qu'en arrivant à l'extrémité supérieure de la noria, une plaque, se situant sur la colonne montante, est transférée sur les bras supports de la colonne descendante par l'intermédiaire de moyens de transfert appropriés.

Quoi qu'il en soit, ces fours connus comportent des enceintes de cuisson de grande capacité de sorte qu'ils sont forcément lourds et encombrants ce qui représente, actuellement, de nombreux inconvénients.

Ainsi, pour répondre au problème de gabarit de transport et pour éviter l'usage de très gros engins de manutention ou encore, tout simplement, pour des raisons de difficulté d'accès dans les locaux d'utilisation, le constructeur se voit dans l'obligation d'expédier un four à cuisson continue sous forme de pièces détachées. Par conséquent, une fois livrées chez l'utilisateur, ces pièces détachées doivent être assemblées par une équipe de monteurs spécialisés. Il en résulte des chantiers de montage et de mise en route de très longue durée avec une onéreuse immobilisation correspondante du matériel et des lieux de la future exploitation.

A ce propos, il existe des fours tunnels composés de modules juxtaposables qui ont pour but de faciliter le transport de ces fours et leur montage chez l'utilisateur. En fait, chaque module défini un tronçon de four qui, après assemblage, est traversé par des moyens de transport sous forme d'un convoyeur à chaînes, par exemple.

Quoi qu'il en soit, de tels fours à cuisson continue connus à grande capacité de production présentent, en outre, un certain nombre d'inconvénients liés à leur manque de souplesse d'utilisation. Tout particulièrement, en raison de l'absence de compartimentage et de régulation, il est difficile de séparer, efficacement, l'atmosphère de début, de milieu et de fin de cuisson des produits. Or, pour certains produits il est nécessaire de moduler les paramètres, tels que température et humidité, selon que l'on est en phase initiale ou finale de cuisson. A titre d'exemple, pour fabriquer des pains complètement cuits, il faut commencer la cuisson dans une atmosphère à haute température et saturée de vapeur et il faut une température et une humidité dégressive en milieu puis en fin de cuisson. Comparativement, pour fabriquer des pains seulement précuits qui sont destinés à être congelés, il faut une température plus basse, mais plutôt constante, combinée à une très forte saturation en vapeur dans l'ensemble du four.

Ces fours à cuisson continue connus sont également peu à même de s'adapter à des modifications de la cadence de production. En reprenant l'exemple ci-dessus, il faut deux à trois fois moins de temps pour précuire un même produit que pour en assurer la cuisson complète. Ainsi, en admettant que les machines de mise en forme et d'apprêt qui précèdent le four dans une ligne de production soient utilisées à pleine charge pour fabriquer des pains complètement cuits et que cet équipement ne peut pas produire davantage de pièces en passant à la fabrication de pains précuits, le four à cuisson continue sera vide de moitié ou aux deux tiers pour respecter, dans ce cas de figure, le temps de cuisson de ces pains précuits. En effet, pour obtenir une réduction du temps de cuisson dans un four à cuisson continue connu, on augmente la vitesse des moyens de transport qui acheminent les produits entre l'entrée et la sortie du four. Tel que déjà indiqué plus haut, en vue de leur cuisson, les produits de boulangerie, viennoiserie ou autre, sont disposés sur des supports, du type plaques ou filets. Or, étant toujours délivrés à une même cadence par les machines situées en amont, ces plaques ou filets sont davantage espacés à l'intérieur du four lorsqu'il faut satisfaire aux conditions précitées, à savoir réduire le temps de cuisson en accélérant les moyens de transport à l'intérieur du four. Il en résulte, généralement, une mauvaise régularité de cuisson des produits disposés sur les plaques, sans compter qu'il faut chauffer et alimenter en vapeur l'intégralité du four ce qui, évidemment, n'est pas optimal en dépense d'énergie.

Un autre inconvénient de ces fours à cuisson continue connus réside dans l'accès quasi impossible aux produits contenus dans le four en cas d'arrêt inopiné des moyens assurant le transport des produits au travers de ce four, par exemple, suite à une coupure d'électricité.

Finalement, l'on observera que la taille et le poids importants de tels fours ou en raison de leur structure d'assemblage ou même en raison de la présence d'un système de chauffage implanté en partie basse, ces fours reposent directement sur le sol. Or, pour des lignes de production automatique, cette disposition oblige le bouclage du circuit de convoyage des supports de cuisson, tels que plaques, filets ou autres, soit en passant au-dessus du four, soit en tournant autour de ce dernier créant, ainsi, un encombrement supplémentaire dans le local d'exploitation et, dans certains cas, empêchant le libre accès au parois latérales du four où celui-ci comporte, souvent, des servitudes ou des hublots de vision vers l'intérieur.

La présente invention a pour but de remédier à l'ensemble des inconvénients précités. En fait, elle a pour but de proposer un four cellulaire composé de modules juxtaposables, chaque module constituant un four élémentaire en ce sens qu'il comporte une enceinte de cuisson et des moyens pour assurer le transport des plaques à l'intérieur de cette dernière, mais aussi, ses propres moyens de régulation des paramètres de cuisson.

Ainsi, l'invention concerne un four à cuisson continue de produits de boulangerie, viennoiserie, pâtisserie ou analogue, comprenant une enceinte de cuisson et des moyens de transport de supports, tels que des plaques, filets ou similaires, sur lesquels sont disposés les produits pour acheminer ceux-ci au travers de l'enceinte de cuisson entre une ouverture d'entrée et une ouverture de sortie, caractérisée par le fait que :
- l'ouverture d'entrée d'une enceinte de cuisson d'un module est apte à coïncider avec l'ouverture de sortie d'un module précédent, lesdites ouvertures d'entrée et de sortie se présentant sous forme de fentes comportant des dimensions minimum pour permettre, soit l'alimentation d'un module en support, soit le transfert de ces supports d'un module à l'autre ou encore leur évacuation en sortie du dernier module ;
- chaque module comporte des moyens de liaison entourant l'ouverture d'entrée et l'ouverture de sortie de l'enceinte de cuisson lui permettant d'être solidarisé au module qui le précède et/ou le suit ;
- lesdits moyens de transport sont définis, en partie, par une noria à fonctionnement intermittent sur laquelle peuvent être disposés les supports en définissant ne colonne ascendante et une colonne descendante à l'extrémité supérieure de cette noria étant aménagés des moyens pour transférer les supports ayant atteint l'extrémité supérieure de la colonne ascendante, du côté de la colonne descendante ;
- lesdits moyens de transport de chaque module comportent en outre, un convoyeur de transfert s'étendant, simultanément, sous la colonne descendante et sous la colonne ascendante de supports pour permettre, selon le cas, l'évacuation en dehors de l'enceinte de cuisson du support qui se présente au bas de la colonne descendante ou pour évacuer, directement, un support ayant été acheminé par un convoyeur d'alimentation ou un convoyeur de transfert d'un module précédent et n'ayant pas été pris en charge par la noria en raison de l'arrêt de fonctionnement de cette dernière.

Selon une autre caractéristique de l'invention, chaque module comporte ses propres moyens de gestion de la température et de l'humidité régnant à l'intérieur de son enceinte de cuisson.

En outre, avantageusement, chaque module repose au sol par l'intermédiaire de pieds ou d'une structure appropriée préservant entre ce module et le sol un espace suffisant pour l'aménagement d'un circuit de bouclage des supports, tels que plaques, filets ou analogues, dans le cadre d'une ligne de production automatique.

De plus, chaque module est muni, latéralement, de portes donnant accès à l'enceinte de cuisson et, tout particulièrement, à l'ensemble des supports disposés à l'intérieur de cette dernière pour en faciliter le retrait.

Les avantages découlant de la présente invention consistent, essentiellement, en ce que chaque module peut être entièrement monté à l'usine du constructeur, puis acheminé sur les lieux d'exploitation par l'intermédiaire de moyens de transport à gabarit normal.

Par ailleurs, les opérations d'essais de chaque module peuvent être menées, préalablement, à l'usine du constructeur, ceci dans toutes les fonctions de chauffage, d'admission de vapeur, d'évacuation de buée et de mécanisme de traversée des supports de cuisson. De cette manière, les opérations de montage et de mise en route sur le site d'utilisation peuvent être très rapides. Tout particulièrement, en ce qui concerne le montage, il suffit de juxtaposer les modules suivant l'axe de convoyage des supports de cuisson, puis de les rendre solidaires par l'intermédiaire de moyens de liaison appropriés.

En outre, chaque module comportant ses propres moyens de régulation de chauffage, d'admission de vapeur et d'évacuation de buée, le four, ainsi constitué de tels modules, présente une parfaite souplesse quant à ses possibilités d'adapter l'atmosphère dans laquelle évoluent les produits à cuire, ceci à chaque stade de cuisson de ces derniers. Tout particulièrement, grâce à ces modules, ce four se subdivise en compartiments qui ne communiquent qu'au travers d'ouvertures réduites au minimum obligatoire pour permettre le transfert des supports de cuisson d'un module dans l'autre. Ainsi, dans chaque compartiment, les paramètres de cuisson peuvent être distincts.

En définitive, un tel four est parfaitement adaptable aux différents processus de cuisson qui demandent des zones de température et d'humidité différentes entre le début et la fin du traitement de cuisson.

Il y a lieu, également, d'observer qu'un module d'un four peut être neutralisé, tout au moins en ce qui concerne ses moyens de chauffage, d'admission de vapeur et d'évacuation de buée. De telle manière, la contenance du four peut être adaptée à la cadence de production et aux conditions de cuisson du moment. Cela s'avère tout particulièrement approprié quant on désire passer d'un produit complètement cuit à un produit précuit nécessitant un temps de cuisson plus court, étant entendu que la cadence de production en nombre de produits et, par conséquent, en nombre de supports, tels que plaques, filets ou analogues, reste identique.

Cette procédure évite d'accélérer la vitesse de traversée des supports dans les modules en fonction et, en définitive, elle évite de créer des espaces vides entre ces supports. En outre, en évitant de chauffer et d'humidifier inutilement un module, on optimise, ainsi, le fonctionnement du four d'un point de vue énergétique.

A noter que dans de telles conditions de fonctionnement, il est possible d'utiliser le ou les modules neutralisés en chauffage et en admission de vapeur en tant que module de refroidissement des produits venant d'être précuits dans les premiers modules.

L'invention présente également un certain nombre d'avantages en ce qui concerne l'encombrement que procure un tel four modulaire. En effet, chaque module présente, en soi, un poids relativement réduit en comparaison à un four à cuisson continue non modulaire tel que connu. Un tel module peut, par conséquent, reposer au sol par l'intermédiaire de pieds ou d'une structure support appropriée permettant de préserver, entre le sol et le fond d'un module un espace suffisant pour le bouclage du circuit des supports, du type plaque ou autre, dans le cas d'une installation automatisée.

D'autres buts et avantages de la présente invention apparaîtront au cours de la description qui va suivre se rapportant à un mode de réalisation qui n'est donné qu'à titre d'exemple indicatif et non limitatif.

La compréhension de cette description sera facilitée en se référant aux dessins joints en annexe et dans lesquels :
- la figure 1 est une représentation schématisée en élévation et en coupe d'un four à cuisson continue selon l'invention et composé de trois modules ;
- la figure 2 est une vue schématisée en plan et en coupe d'un four tel que représenté dans la figure 1.

Tel que visible dans les figures des dessins ci-joints, la présente invention est relative à un four 1 à cuisson continue de produis de boulangerie, viennoiserie, pâtisserie et similaire, ces produits étant disposés sur des supports 2, du type plaques, filets ou analogues, de forme généralement rectangulaire.

Selon l'invention, ce four 1 est composé de modules A, B, C, juxtaposables, chacun de ces modules comportant une enceinte de cuisson 3, 3', 3'', ainsi que des moyens de transport 4, 4', 4'' qui permettent d'acheminer les produits, disposés sur les supports 2, au travers de cette enceinte de cuisson 3, 3', 3'', depuis une ouverture d'entrée 5, 5', 5'' jusqu'à une ouverture de sortie 6, 6', 6''.

De plus, selon l'invention, l'ouverture d'entrée 5', 5'' d'un module B, C est à même de coïncider avec l'ouverture de sortie 6, 6' du module A, B qui le précède et qui lui est immédiatement juxtaposé. Selon un mode de réalisation préférentiel, ces ouvertures d'entrée et de sortie 5, 6 ; 5', 6' ; 5'', 6'' d'un module A, B, C se situent sur un même plan horizontal et sur des côtés opposés 7, 8 ; 7', 8' ; 7'', 8'' de l'enceinte de cuisson 3, 3', 3''. Ces côtés 7, 8; 7' , 8' ; 7'', 8'' sont, par ailleurs, perpendiculaires à l'axe 9 de traversée des supports 2 dans le four 1.

En outre, les moyens de transport 4, 4', 4'' d'un module A, B, C sont définis de telle manière qu'ils sont aptes à disposer, en sortie de l'enceinte de cuisson 3, 3', 3'', les supports 2 sur les moyens de transport 4, 4', 4'' du module B, C suivant immédiatement juxtaposé. Bien entendu, en sortie du dernier module C, les moyens de transport 4'' viennent disposer ces supports 2 sur un convoyeur d'évacuation 10 approprié.

En théorie, un four 1 peut être constitué d'un nombre illimité de tels modules A, B, C, la réalisation représentée sous forme de trois modules dans les dessins ci-joints n'étant donnée qu'à titre d'exemple indicatif et non limitatif. En pratique, le nombre de ces modules A, B, C varie de deux à une dizaine, sachant qu'il est déterminé en fonction de l'importance de la production envisagée du temps de cuisson des produits concernés, mais également en fonction des dimensions que peuvent adopter chacun de ces modules A, B, C dimensions qui dépendent tout particulièrement de celles du local d'exploitation destiné à accueillir le four 1. Tel que cela apparaîtra plus clairement dans la description qui va suivre, il peut être nécessaire de limiter la hauteur des modules A, B, C, en fonction de la hauteur sous plafond disponible dans les locaux d'exploitation.

Selon un mode de réalisation préférentiel, une enceinte de cuisson 3, 3', 3'' est délimitée par une enveloppe isolante 11, 11', 11'' de section parallélépipédique comportant, d'une part, deux parois latérales, respectivement 12, 12', 12'' et 13, 13', 13'' parallèles à l'axe 9 de traversée des supports 2 et, d'autre part, deux parois verticales transversales 14, 14', 14'' et 15, 15', 15''. Ces dernières sont, par conséquent, perpendiculaires à l'axe 9 et définissent, respectivement, les côtés 7, 8 ; 7', 8', 7'', 8'' de l'enceinte de cuisson 3, 3', 3'' comportant l'ouverture d'entrée 5, 5, 5'' et l'ouverture de sortie 6, 6', 6''. Cette enveloppe isolante 11, 11', 11'' est, par ailleurs, fermée en partie basse et à son extrémité supérieure par un plancher 16 et un plafond 17 de forme semi-cylindrique pour des raisons qui seront exposées plus en avant dans la description.

Avantageusement, chaque module A, B, C, repose au sol par l'intermédiaire de pieds 18 ou d'une structure support quelconque ayant pour but, dans tous les cas, de ménager un espace libre 19 entre le plancher 16 et le sol permettant l'implantation, sous ces modules A, B, C, d'un convoyeur 20 pour le retour des supports 2 lorsque le four 1 est placé dans un circuit de production automatisé.

Avantageusement, chaque module A, B, C, comporte des moyens de liaison 21, 22 qui lui permettent d'être solidarisé au module qui le précède et/ou le suit. Préférentiellement, ces moyens de liaison 21, 22, se présentent sous forme de brides entourant l'ouverture d'entrée 5, 5', 5'' et l'ouverture de sortie 6, 6', 6'' de chacun de ces modules A, B, C.

Il convient d'observer que ces ouvertures d'entrée 5, 5', 5'' et de sortie 6, 6', 6''se présentent avantageusement, sous forme de fentes et comportent des dimensions minimum pour permettre, soit l'alimentation d'un module A, B, C, en support 2, soit le transfert de ces supports 2 d'un module à l'autre, ou encore leur évacuation en sortie du dernier module C. Ceci a l'avantage de limiter autant que possible, la communication d'un module par rapport à un autre.

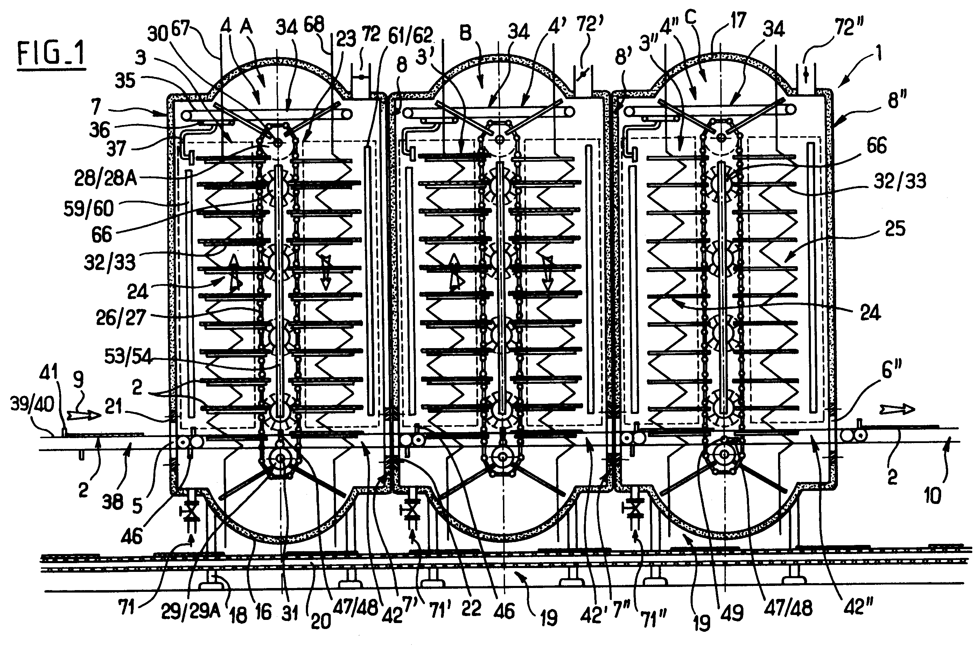

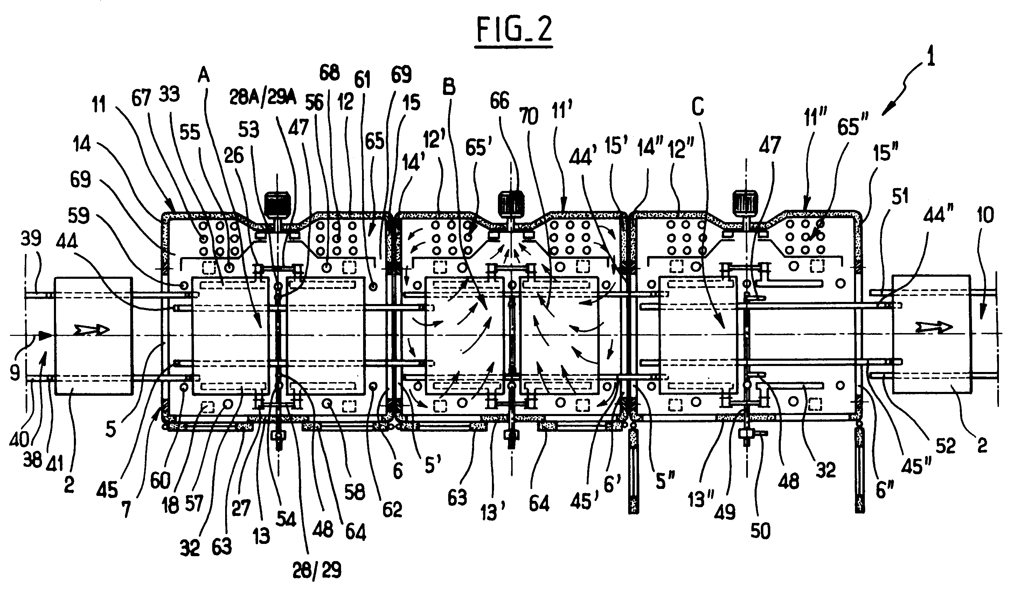

Selon le mode de réalisation plus particulièrement illustré dans les figures 1 et 2 des dessins ci-joints, les moyens de transport 4, 4', 4'' d'un module A, B, C, sont définis, en partie, par une noria 23 à fonctionnement intermittent sur laquelle peuvent être disposés les supports 2 en définissant une colonne ascendante 24 et une colonne descendante 25. Selon un mode d'exécution préférentiel, cette noria 23 est composée d'un couple de chaînes 26, 27 disposées de part et d'autre de l'axe de traversée 9. Chacune de ces chaînes 26, 27 vient s'enrouler, partiellement, autour de deux roues à chaînes 28, 29, respectivement, 28A, 29A à axe de rotation horizontal et situées dans un même plan vertical. En fait, pour assurer le synchronisme de fonctionnement des chaînes 26, 27, les roues 28, 28A respectivement, 29, 29A sont montées sur un même arbre horizontal, respectivement, 30, 31. Il convient d'observer que l'un de ces arbres horizontaux, préférentiellement, l'arbre horizontal supérieur 30, est accouplé à un arbre moteur traversant la paroi latérale 12, 12', 12'' de l'enveloppe isolante 11, 11', 11''et coopérant avec des moyens moteurs appropriés qui, pour une question de clarté des dessins, n'ont pas été représentés.

Sur chacune de ces chaînes 26, 27 de la noria 23 sont fixés, perpendiculairement, des bras supports 32, 33, ceci avec un espacement régulier. En outre, à un bras support 32 d'une chaîne 26 correspond un bras support 33 sur la chaîne 27 de sorte que sur deux bras supports 32, 33 se situant à un même niveau, peut reposer, horizontalement, un support 2. C'est précisément en raison de la présence de la noria 23 et le mouvement semi circulaire décrit par les bras supports 32, 33 à ses extrémités supérieure et inférieure que le plancher 16 et le plafond 17 sont de forme semi-cylindrique. Une telle forme permet, en effet, d'éviter la présence, à l'intérieur de l'enceinte de cuisson 3, 3', 3'' de zones inutiles.

Ainsi, la colonne ascendante 24 de supports 2 est définie par l'ensemble de ces supports 2 reposant sur les bras supports 32, 33 se situant d'un côté de la noria 23 et auquel il est communiqué un mouvement ascendant par l'intermédiaire des chaînes 26, 27, tandis que la colonne descendante 25 est définie par l'ensemble des supports 2 reposant sur les bras supports 32, 33 disposés de l'autre côté de la noria 23.

A ce propos, il convient d'observer que pour faciliter l'accès au mécanisme contribuant au chargement et au déchargement d'une noria 23 correspondant à un module A, B, C, les ouvertures d'entrée 5, 5', 5'' et de sortie 6, 6', 6'' se situent dans la partie basse de ces modules A, B, C et donc de la noria 23. Ainsi, les supports 2 décrivent, tout d'abord un mouvement ascendant, puis un mouvement descendant.

Les moyens de transport 4, 4', 4'' comportent, en outre, des moyens 34 pour transférer les supports 2 ayant atteint l'extrémité supérieure de la noria 23 et, donc, de la colonne ascendante 24 du côté de la colonne descendante 25. Lorsqu'un support 2 atteint cette extrémité supérieure de la noria 23, celle-ci est arrêtée permettant aux moyens 34, sous forme, par exemple, d'un pousseur horizontal composé d'un couple de chaînes 35 actionnant en va et vient un chariot 36 muni de poussoirs 37, de pousser le support 2 depuis les bras supports 32, 33 sur lesquels il repose et correspondant à la colonne ascendante 24, sur les bras supports 32, 33 disposés dans le même plan horizontal et correspondant à la colonne descendante 25.

Il convient d'observer que durant ce temps d'arrêt de fonctionnement de la noria 23, une plaque support 2 est, par ailleurs, disposée sur les bras supports 32, 33 en attente se situant au bas de la colonne ascendante 24, tandis que le support 2 reposant sur les bras supports 32, 33 au bas de la colonne descendante 25 est évacué du module A, B, C. A ce moment là, le cycle recommence, la noria 23 étant mise en mouvement jusqu'à ce que se présente, à nouveau, un support 2 au-devant des moyens de transfert 34.

Le chargement du four est effectué au moyen d'un convoyeur d'alimentation 38 qui pénètre dans l'enceinte de cuisson 3 du premier module A au travers de son ouverture d'entrée 5 pour déposer sur les bras supports 32, 33, en attente au bas de la noria 23 un support 2 de produits à cuire.

Ce convoyeur d'alimentation 38 est constitué, préférentiellement, de deux chaînes 39, 40 à défilement parallèle et sensiblement horizontal sur lesquelles sont disposés des supports 2. Chacune de ces chaînes 39, 40 est munie de taquets 41 qui, lorsque lesdites chaînes 39, 40 sont mises en mouvement, viennent pousser un support 2 sur lesdits bras supports 32, 33 à l'intérieur de l'enceinte de cuisson 3 dans les conditions précédemment mentionnées. Bien entendu, tout comme les moyens de transfert 34, le fonctionnement de ce convoyeur d'alimentation 38 est commandé lorsque la noria 23 est arrêtée.

Finalement, les moyens de transport 4, 4', 4''de chaque module A, B, C sont complétés par un convoyeur de transfert 42, 42', 42'' qui, lorsque la noria 23 est arrêtée, est en mesure d'évacuer, en dehors de l'enceinte de cuisson 3, 3', 3'', le support 2 qui se présente, à ce moment là, au bas de la colonne descendante 25. Un tel convoyeur de transfert 42, 42', correspondant à un module A, B, sert, en outre, en tant que convoyeur d'alimentation au module, respectivement, B, C suivant. A titre d'exemple, un support 2, prélevé au bas de la colonne descendante 25 du premier module A par l'intermédiaire du convoyeur de transfert 42, est disposé sur les bras supports 32, 33 de la noria 23, en bas de la colonne ascendante 24, du module B suivant. Bien entendu, les supports 2 prélevés par le convoyeur de transfert 42'' du dernier module C sont déposés sur le convoyeur d'évacuation 10.

L'on comprend bien que le fonctionnement intermittent des norias 23 est synchronisé de sorte qu'un support 2 prélevé, à un instant donné, de l'enceinte de cuisson 3, 3' d'un module A, B puisse être déposé, immédiatement, sur la noria 23 de l'enceinte de cuisson 3', 3'' correspondant au module, respectivement, B, C, suivant.

Tout comme le convoyeur d'alimentation 38, ces convoyeurs de transfert 42, 42', 42'' sont constitués de deux chaînes à défilement parallèle et sensiblement horizontal 44, 44', 44'' ; 45, 45' , 45'', portant des taquets 46 par l'intermédiaire desquels elles sont à même de prendre en charge un support 2 en vue de l'évacuer d'une enceinte de cuisson 3, 3', 3'' d'un module A, B, C et de le déposer dans un module suivant ou sur le convoyeur d'évacuation 10.

Préférentiellement, les chaînes 44, 44', 44'' et 45, 45', 45'' d'un convoyeur de transfert 43, 42', 42'' s'étendent, non seulement, sous la colonne descendante 25 de supports 2, mais, également, sous la colonne ascendante 24. De cette manière, un tel convoyeur de transfert 42, 42', 42''est en mesure de prendre en charge un support 2 qui, ayant été introduit dans un module A, B, C, n'a pas été relevé par la noria 23 en raison de l'arrêt de fonctionnement de cette dernière. En fin de compte, ce support 2 peut, au cours du cycle de fonctionnement suivant, être évacué par ce convoyeur de transfert 42, 42', 42''.

Plus précisément, si l'on prend l'exemple d'un four 1 qui, tel que représenté dans les dessins ci-joints, se compose de trois modules A, B, C, prévus, dans le cas d'une cadence de production normale , pour la cuisson complète de pains, nécessitant, par conséquent, un temps de cuisson donné, l'emploi de ce four 1 pour réaliser des pains précuits peut se faire par la simple neutralisation d'un ou plusieurs des modules B, C, ceci, précisément, en fonction du temps nécessaire pour précuire ces pains.

Ainsi, il n'est pas nécessaire d'accélérer le mécanisme de fonctionnement des moyens de transport 4, 4', 4'' des modules A, B, C, pour réduire le temps de cuisson ce qui conduirait, inévitablement et pour une cadence de production donnée, à l'espacement des supports 2 à l'intérieur du four 1 et, par conséquent, à une mauvaise régularité de la cuisson des produits.

Par ailleurs, en évitant de chauffer tous les modules A, B, C, du four 1 on optimise, évidemment, son fonctionnement d'un point de vue énergétique. A noter, d'ailleurs, que certains de ces modules A, B, C, peuvent être neutralisés uniquement en ce qui concerne leurs moyens de chauffage, de production de vapeur et autre régulation de buée. A titre d'exemple, en maintenant en fonctionnement les moyens de transport 4'' du module C non chauffé, celui-ci peut servir en tant que module de refroidissement des produits venant d'être précuits dans les deux premiers modules A, B.

L'on observera que pour éviter que les supports 2 ne pénètrent plus qu'il ne faut dans l'enceinte de cuisson 3, 3', 3'' sous l'impulsion d'un convoyeur d'alimentation 38 ou d'un convoyeur de transfert 42, 42' des butées 47, 48 sont aménagées, à cet effet, au bas de la noria 23. Toutefois, de telles butées 47, 48 sont de nature escamotable, ceci dans le but précédemment mentionné. Notamment, en cas de neutralisation totale d'un module C, le convoyeur de transfert 42'' doit être en mesure de pousser directement à l'extérieur de ce module C, le support 2 qui a été introduit dans son enceinte de cuisson 3'' par le convoyeur de transfert 42' d'un module B en amont au cours d'un cycle précédent. Ainsi, ces butées 47, 48 sont susceptibles d'être basculées en position horizontale par l'intermédiaire d'un axe transversal 49 manipulable depuis l'extérieur de l'enceinte de cuisson 3, 3', 3'' à l'aide d'une manette 50.

De manière à assurer un passage sans heurt des supports 2 d'un convoyeur d'alimentation 38 sur un convoyeur de transfert 42 ou encore entre deux convoyeurs de transfert 42, 42', 42'' successifs et, bien sûr, en sortie du dernier module C, depuis le convoyeur de transfert 42'' sur le convoyeur d'évacuation 10, les chaînes 39, 40 ; 44, 45 ; 44', 45' ; 44'', 45'' ; 51, 52 de ces différents convoyeurs, respectivement, 38, 42, 42', 42'' et 10, s'interpénètrent. Ainsi, les chaînes, par exemple, 39, 40 d'un convoyeur, dans ce cas le convoyeur d'alimentation 38, sont sensiblement plus écartés par rapport aux chaînes 44, 45, du convoyeur de transfert 42 suivant. Puis les chaînes 44', 45' du convoyeur de transfert 42' sont à nouveau plus écartées et ainsi de suite.

Chaque module A, B, C, comporte, également, un certain nombre de moyens de guidage afin de bien canaliser la colonne de supports 2 ascendante 24 et la colonne de supports 2 descendante 25 disposées sur une noria 23.

Ainsi, on dispose de guides verticaux centraux 53, 54 assurant la bonne séparation entre la colonne ascendante 24 et la colonne descendante 25 de ces supports 2, tandis que des guides verticaux latéraux 55, 56 respectivement 57, 58 en assurent le guidage latéral.

Finalement, des guides verticaux de montée 59, 60 et des guides verticaux de descente 61, 62 disposés de part et d'autre de la noria 23, dans le sens de convoyage des supports 2, assurent le maintien de ces derniers sur leurs bras supports 32, 33 respectifs lors de la montée et de la descente.

Avantageusement, l'une des parois latérales 13, 13', 13''de l'enveloppe isolante 11, 11', 11'', définissant l'enceinte de cuisson 3, 3', 3'', comporte au moins une porte d'accès 63 qui, en cas d'arrêt inopiné du fonctionnement d'un module A, B, C, par exemple en cas de panne d'électricité, permet d'en retirer les supports 2 disposés sur la noria 23. En fait, préférentiellement, chacun de ces modules A, B, C, comporte, au niveau de la paroi latérale 13, 13', 13'', deux portes d'accès 63, 64 dont chacune donne accès à une colonne 24, 25 de supports 2.

A noter que les guides verticaux latéraux 54, 58, situés du côté de ces portes d'accès 63, 64 sont de nature escamotable pour permettre, précisément, de retirer les supports 2 disposés sur les bras supports 32, 33. De même, les guides verticaux de montée 59, 60 et de descente 61, 62 peuvent, eux aussi, être prévus escamotables ou basculants en vue de faciliter cette opération.

Avantageusement, chaque module A, B, C comporte ses propres moyens de gestion de la température et de l'humidité régnant à l'intérieur de son enceinte de cuisson 3, 3', 3''. Ainsi, chaque module A, B, C, comporte son système individuel de chauffage 65, 65', 65'' disposé, préférentiellement, entre la paroi latérale 12, 12', 12'', opposée à celle comportant les portes d'accès 63, 64 et le mécanisme des moyens de transport 4, 4', 4'' représentés, principalement, par la noria 23.

Ces systèmes de chauffage 65, 65', 65'' fonctionnent par recyclage d'air chaud puisé. Ainsi, dans le mode de réalisation représenté, chaque module A, B, C, comporte une ou plusieurs turbines motorisées 66, ici au nombre de quatre qui aspirent l'air de l'enceinte de cuisson 3, 3', 3'' pour assurer son passage sur des moyens chauffants 67, 68. A ce propos, ceux-ci ont été représentés par des bottes de résistance électriques sur la figure 2, tandis que sur la figure 1 ils ont été schématisés par des lignes en zig zag. Bien entendu, d'autres types de moyens de chauffage peuvent être substitués à ces bottes de résistance électrique. Notamment, on peut également utiliser des échangeurs chauffés par un brûleur à combustible liquide ou gazeux.

L'air chaud est ensuite canalisé en direction de fentes verticales 69 se situant à l'avant et à l'arrière de chacun des modules A, B, C, pour être soufflés entre les supports 2 formant la colonne ascendante 24 et descendante 25. Le balayage des produits disposés sur ces supports 2 s'opère, ensuite, suivant les flèches 70 plus particulièrement visibles au niveau du module B de la figure 2.

Tel que déjà précisé plus haut, le nombre des turbines motorisées 66 est variable, essentiellement, en fonction de la hauteur des modules A, B, C et, en conséquence, suivant le nombre de supports 2 contenus dans les colonnes ascendantes et descendantes 24, 25.

Pour une gestion individuelle de la température à l'intérieur de l'enceinte de cuisson, 3, 3', 3'' de chaque module A, B, C, chacun des systèmes de chauffage 65, 65', 65'' possède son réglage thermostatique individuel de sorte qu'il est loisible de régler la courbe de température pendant la cuisson au travers de ce four 1. A noter qu'un tel système de chauffage 65, 65', 65'' indépendant pour chaque module A, B, C, permet, précisément, de neutraliser un ou plusieurs d'entre eux en vue de réduire le temps de cuisson des produits et tout particulièrement dans le cas où le fonctionnement des moyens de transport 4, 4', 4'' de l'un de ces modules A, B, C, a été coupé.

Préférentiellement, le systèmes de chauffage 65, 65', 65'' de chaque module A, B, C, sont disposés d'un même côté par rapport à l'axe 9 de convoyage des supports 2, ce qui, d'une part, rend plus aisé, l'accès aux servitudes de ces systèmes de chauffage. D'autre part, cette disposition est avantageuse dans la mesure où les portes d'accès 63, 64 de ces modules A, B, C, sont, dans ces conditions, également disposées sur un même côté latéral du four 1.

Etant donné que chaque module A, B, C, comporte des moyens de gestion individuels de la température, mais aussi de l'humidité régnant à l'intérieur de son enceinte de cuisson 3, 3', 3'', lesdits modules A, B, C, comportent, dans leur partie inférieure, une admission de vapeur 71, 71', 71''. A ce propos, dans le cas où les admissions de vapeur 71, 71', 71'' sont reliées à un réseau général de distribution de vapeur, chaque module A, B, C est alimenté par une vanne de régulation individuelle de sorte que l'on puisse choisir la saturation désirée de vapeur, spécifique à chaque module A, B, C.

En variante, l'admission de vapeur 71, 71', 71'' de ces modules A, B, C peut être raccordée à un petit générateur de vapeur individuel par module. Dans ce cas, la régulation individuelle de ces petits générateurs peut se substituer à l'utilisation d'une vanne régulatrice.

On trouve, également, dans la partie supérieure de chaque module A, B, C, une évacuation de buée réglable 72, 72', 72''.

De cette façon l'on peut régler, à volonté, l'évacuation de la vapeur dégagée par les produits en cours de cuisson dans les modules A, B, C, et l'on peut, ainsi, s'adapter au processus de cuisson désiré.

Les avantages découlant de la présente invention sont, évidement, une très grande adaptabilité d'un tel four à cuisson continue modulaire aux différentes conditions de cuisson rencontrées. Tout particulièrement, en cas de production de produit à temps de cuisson réduit, il est possible de neutraliser un ou plusieurs des modules qui composent le four à cuisson continue et, ainsi, l'on peut optimiser le fonctionnement de ce four d'un point de vue énergétique, mais, également, sur le plan de régularité de la cuisson des produits.

Dans ces conditions, la présente invention représente un net progrès par rapport à l'état de la technique antérieur.

## Revendications

1. Four à cuisson continue de produits de boulangerie, viennoiserie, pâtisserie et analogues, composé de modules juxtaposables (A, B, C), chaque module (A, B, C) comportant une enceinte de cuisson (3, 3', 3'') et des moyens de transport (4, 4', 4'') de supports (2), tels que des plaques, filets ou similaires, sur lesquels sont disposés les produits pour acheminer ceux-ci au travers de l'enceinte de cuisson (3, 3', 3''), entre une ouverture d'entrée (5, 5', 5'') et une ouverture de sortie (6, 6', 6''), caractérisé par le fait que :
- l'ouverture d'entrée (5, 5', 5'') d'une enceinte de cuisson (3, 3', 3'') d'un module (B, C) est apte à coïncider avec l'ouverture de sortie (6, 6-) d'un module (A, B) précédent, lesdites ouvertures d'entrée (5, 5', 5'') et de sortie (6, 6', 6'') se présentant sous forme de fentes comportant des dimensions minimum pour permettre, soit l'alimentation d'un module (A, B, C) en supports (2), soit le transfert de ces supports (2) d'un module à l'autre ou encore leur évacuation en sortie du dernier module (C) ;
- chaque module (A, B, C) comporte des moyens de liaison (21, 22) entourant l'ouverture d'entrée (5, 5', 5'') et l'ouverture de sortie (6, 6', 6'') de l'enceinte de cuisson (3, 3', 3'') lui permettant d'être solidarisé au module qui le précède et/ou le suit ;
- lesdits moyens de transport (4, 4', 4'') sont définis, en partie, par une noria (23) à fonctionnement intermittent sur laquelle peuvent être disposés les supports (2) en définissant une colonne ascendante (24) et une colonne descendante (25), à l'extrémité supérieure de cette noria (23) étant aménagés des moyens (34) pour transférer les supports (2) ayant atteint l'extrémité supérieure de la colonne ascendante (24), du côté de la colonne descendante (25) ;
- lesdits moyens de transport (4, 4', 4'') de chaque module (A, B, C) comportent en outre, un convoyeur de transfert (42, 42', 42'') s'étendant, simultanément, sous la colonne descendante (25) et sous la colonne ascendante (24) de supports (2) pour permettre, selon le cas, l'évacuation en dehors de l'enceinte de cuisson (3, 3', 3''), du support (2) qui se présente au bas de la colonne descendante (25) ou pour évacuer, directement, un support (2), ayant été acheminé par un convoyeur d'alimentation (38) ou un convoyeur de transfert (42, 42', 42'') d'un module précédant et n'ayant pas été pris en charge par la noria (23) en raison de l'arrêt de fonctionnement de cette dernière.

2. Four à cuisson continue selon la revendication 1, caractérisé par le fait qu'une enceinte de cuisson (3, 3', 3'') d'un module (A, B, C) est délimitée par une enveloppe isolante (11, 11', 11'') de section parallélépipédique comportant, d'une part, deux parois latérales, respectivement, (12, 12', 12'') et (13, 13', 13''), parallèles à l'axe (9) de traversée des supports (2) dans le four (1) et, d'autre part, deux parois verticales transversales (14, 14', 14'') et (15, 15', 15'') , perpendiculaires à l'axe (9) et comportant, respectivement, l'ouverture d'entrée (5, 5', 5'') et l'ouverture de sortie (6, 6', 6'') , cette enveloppe isolante (11, 11' , 11'') étant par ailleurs fermée en partie basse et à son extrémité supérieure par un plancher (16) et un plafond (17), préférentiellement de forme semi-cylindrique.

3. Four à cuisson continue selon l'une quelconque des revendications 1 et 2, caractérisé par le fait que chaque module (A, B, C) repose au sol par l'intermédiaire de pieds (18) ou d'une structure support appropriée permettant de préserver sous ces modules (A, B, C) un espace libre (19) pour l'implantation d'un convoyeur (20) pour le retour des supports (2) dans un circuit de production automatisé.

4. Four à cuisson continue selon l'une quelconque des revendications précédentes, caractérisé par le fait que les ouvertures d'entrée (5, 5', 5'') et de sortie (6, 6', 6'') se situent dans un même plan sensiblement horizontal dans la partie basse d'un module (A, B, C).

5. Four à cuisson continue selon la revendication 1, caractérisé par le fait qu'un convoyeur de transfert (42, 42', 42'') est constitué par un couple de chaînes (44, 44', 44'' ; 45, 45', 45'') portant des taquets (46).

6. Four à cuisson continue selon la revendication 1, caractérisé par le fait que chaque module (A, B, C) comporte des butées (47, 48) à même de limiter l'engagement dans l'enceinte de cuisson (3, 3', 3'') d'un support (2) acheminé, soit par un convoyeur d'alimentation (38), soit par les moyens de transport (4, 4') d'un module (A, B) précédent, pour permettre, ainsi, la prise en charge de ce support (2) par la noria (23), ces butées (47, 48) étant de nature escamotable autorisant la prise en charge directe de ce support (2) par le convoyeur de transfert (42, 42', 42'') en vue de son évacuation directe de l'enceinte de cuisson (3, 3', 3'').

7. Four à cuisson continue selon la revendication 1, caractérisé par le fait que le convoyeur d'alimentation (38), les convoyeurs de transfert (42, 42', 42'') successifs et un convoyeur d'évacuation (10) s'interpénètrent en vue d'assurer un passage sans heurt des supports (2) d'un convoyeur au suivant.

8. Four à cuisson continue selon l'une quelconque des revendications précédentes, caractérisé par le fait que chaque module (A, B, C) comporte des moyens de guidage (53, 54 ; 55, 56, 57, 58 ; 59, 60 ; 61, 62) pour canaliser la colonne ascendante (24) de supports (2) et la colonne descendante (25) de supports (2) disposés sur la noria (23).

9. Four à cuisson continue selon la revendication 2, caractérisé par le fait que l'une des parois latérales (13, 13', 13'') de l'enveloppe isolante (11, 11', 11'') définissant l'enceinte de cuisson (3, 3', 3''), comporte au moins une porte d'accès (63), préférentiellement deux portes d'accès (63, 64), donnant accès, chacune, à une colonne ascendante (24) ou descendante (25) de supports (2).

10. Four à cuisson continue selon l'une quelconque des revendications précédentes, caractérisé par le fait que chaque module (A, B, C) comporte :
- un système individuel de chauffage (65, 65', 65'') muni d'un réglage thermostastique individuel ;
- une admission de vapeur (71, 71', 71'') alimentée par une vanne de régulation individuelle ou un générateur de vapeur individuel par module ;
- et une évacuation de buée réglable (72, 72', 72'') disposée en partie supérieure de ce module (A, B, C).

11. Four à cuisson continue selon les revendications 2, 9 et 10, caractérisé par le fait que les systèmes de chauffage individuel (65, 65', 65'') sont disposés entre la paroi latérale (12, 12', 12''), opposée à celle (13, 13', 13'') comportant les portes d'accès (63, 64) et le mécanisme des moyens de transport (4, 4', 4'') constitués, en partie, par la noria (23).

## Claims

1. Continuous-baking oven for bread, Viennese bread, pastry and the like products, comprised of juxtaposable modules (A, B, C) each module (A, B, C) including a baking chamber (3, 3', 3'') and means for conveying (4, 4', 4'') holders (2), such as plates, racks or the like, on which are arranged the products for conveying same through the baking chamber (3, 3', 3''), between an inlet opening (5, 5', 5'') and an outlet opening (6, 6', 6''), characterized in that:
- the inlet opening (5, 5', 5'') of a baking chamber (3, 3', 3'') of a module (B, C) is capable of coinciding with the outlet opening (6, 6') of a preceding module (A, B), said inlet (5, 5', 5'') and outlet openings (6, 6', 6'') being in the shape of slots having minimum dimensions in order to allow either the feeding of a module (A, B, C) with holders (2) or the transfer of these holders (2) from one module to another or even their feeding-out at the exit of the last module (C),
- each module (A, B, C) includes connecting means (21, 22) surrounding the inlet opening (5, 5', 5'') and the outlet opening (6, 6', 6'') of the baking chamber (3, 3', 3'') allowing same to be made integral with the module which precedes same and/or follows same,
- said conveying means (4, 4', 4'') are partly defined by an intermittently operating noria (23) on which can be arranged the holders (2) while defining an ascending column (24) and a descending column (25), at the upper end of this noria (23) being arranged means (34) for transferring the holders (2) having reached the upper end of the ascending column (24) to the side of the descending column (25),
- said conveying means (4, 4', 4'') of each module (A, B, C) include, in addition, a transfer conveyer (42, 42', 42'') simultaneously extending under the descending column (25) and under the ascending column (24) of holders (2) in order to allow, as the case may be, the evacuation out of the baking chamber (3, 3', 3'') of the holder (2) which arrives at the bottom of the descending column (25) or the direct evacuation of a holder (2) which has been conveyed by a feed-in conveyer (38) or a transfer conveyer (42, 42', 42'') of a preceding module and which has not been taken over by the noria (23) due to the interruption of the operation of this latter.

2. Continuous-baking oven according to claim 1, characterized in that a baking chamber (3, 3', 3'') of a module (A, B, C) is defined by an insulating jacket (11, 11', 11'') with a parallelepipedic cross-section including, on the one hand, two side walls (12, 12', 12'') and (13, 13', 13''), respectively, parallel to the axis (9) of passing of the holders (2) through the oven (1) and, on the other hand, two vertical cross walls (14, 14', 14'') and (15, 15', 15'') perpendicular to the axis (9) and including the inlet opening (5, 5', 5'') and the outlet opening (6, 6', 6''), respectively, this insulating jacket (11, 11', 11'') being, furthermore, closed at the lower portion and at its upper end by a floor (16) and a ceiling (17) which preferably have a semi-cylindrical shape.

3. Continuous-baking oven according to any of claims 1 and 2, characterized in that each module (A, B, C) rests on the floor through feet (18) or an appropriate bearing structure allowing to preserve under these modules (A, B, C) a free space (19) for installing a conveyer (20) for returning the holders (2) to an automated production circuit.

4. Continuous-baking oven according to any of the preceding claims, characterized in that the inlet (5, 5', 5'') and outlet openings (6, 6', 6'') are located in a same substantially horizontal plane in the lower portion of a module (A, B, C).

5. Continuous-baking oven according to claim 1, characterized in that a transfer conveyer (42, 42', 42'') is formed by a couple of chains (44, 44', 44''; 45, 45', 45'') bearing dogs (46).

6. Continuous-baking oven according to claim 1, characterized in that each module (A, B, C) includes stops (47, 48) capable of limiting the engagement into the baking chamber (3, 3', 3'') of a holder (2) conveyed either by a feed-in conveyer (38) or by the conveying means (4, 4') of a preceding module (A, B), in order to thus allow the takeover of this holder (2) by the noria (23), these stops (47, 48) being of a retractable nature allowing the direct takeover of this holder (2) by the transfer conveyer (42, 42', 42'') with a view to its direct evacuation from the baking chamber (3, 3', 3'').

7. Continuous-baking oven according to claim 1, characterized in that the feed-in conveyer (38), the successive transfer conveyers (42, 42', 42'') and a feed-out conveyer (10) interpenetrate, in order to ensure a smooth transition of the holders (2) from one conveyer to the next one.

8. Continuous-baking oven according to any of the preceding claims, characterized in that each module (A, B, C) includes guiding means (53, 54; 55, 56, 57, 58; 59, 60; 61, 62) for shepherding the ascending column (24) of holders (2) and the descending column (25) of holders (2) arranged on the noria (23).

9. Continuous-baking oven according to claim 2, characterized in that one side wall (13, 13', 13'') of the insulating jacket (11, 11', 11'') defining the baking chamber (3, 3', 3'') includes at least one access door (63), preferably two access doors (63, 64), each providing access to an ascending (24) or descending column (25) of holders (2).

10. Continuous-baking oven according to any of the preceding claims, characterized in that each module (A, B, C) includes:
- an individual heating system (65, 65', 65'') provided with an individual thermostatic adjustment,
- a steam inlet (71, 71', 71'') fed through an individual control valve or an individual steam generator per module,
- and an adjustable vapour evacuation (72, 72', 72'') arranged in the upper portion of this module (A, B, C).

11. Continuous-baking oven according to claims 2, 9 and 10, characterized in that the individual heating systems (65, 65', 65'') are arranged between the side wall (12, 12', 12'') opposite the one (13, 13', 13'') including the access doors (63, 64) and the mechanism of the conveying means (4, 4', 4'') partly comprised of the noria (23).

## Patentansprüche

1. Ofen zum kontinuierlichen Backen von Brot-, Wienerback-, Konditor- und dergleichen Waren, bestehend aus nebeneinanderstellbaren Baukästen (A, B, C), wobei jeder Baukasten (A, B, C) eine Backkammer (3, 3', 3'') und Mittel (4, 4', 4'') zum Fördern von Trägern (2), wie Platten, Gittern oder dergleichen, umfaßt, auf denen die Produkte angeordnet sind, um diese durch die Backkammer (3, 3', 3''), von einer Einlaßöffnung (5, 5', 5'') zu einer Auslaßöffnung (6, 6', 6''), zu führen, dadurch gekennzeichnet, daß:
- die Einlaßöffnung (5, 5', 5'') einer Backkammer (3, 3', 3'') eines Baukastens (B, C) geeignet ist, mit der Auslaßöffnung (6, 6') eines vorgehenden Baukastens (A, B) übereinzustimmen, wobei die genannten Einlaß- (5, 5', 5'') und Auslaßöffnungen (6, 6', 6'') als Schlitze ausgestaltet sind, die Minimalabmessungen aufweisen, um entweder die Beschickung eines Baukastens (A, B, C) mit Trägern (2) oder das Hinüberbringen dieser Träger (2) von einem Baukasten zu dem anderen oder auch deren Entfernung am Ausgang des letzten Baukastens (C) zu erlauben,
- jeder Baukasten (A, B, C) Verbindungsmittel (21, 22) umfaßt, die die Einlaßöffnung (5, 5', 5'') und die Auslaßöffnung (6, 6', 6'') der Backkammer (3, 3', 3'') umgeben und diesen erlauben, fest mit dem vorgehenden und/oder dem folgenden Baukasten verbunden zu werden,
- die genannten Fördermittel (4, 4', 4'') zum Teil von einem diskontinuierlich arbeitenden Schöpfrad (23) definiert werden, auf das die Träger (2) angeordnet werden können, während sie eine steigende Kolonne (24) und eine senkende Kolonne (25) definieren, wobei am oberen Ende dieses Schöpfrades (23) Mittel (34) zum Hinüberbringen der Träger (2), die das obere Ende der steigenden Kolonne (24) erreicht haben, zur Seite der senkenden Kolonne (25) vorgesehen sind,
- die genannten Fördermittel (4, 4', 4'') jedes Baukastens (A, B, C) weiterhin einen Transferförderer (42, 42', 42'') umfassen, der sich gleichzeitig unterhalb der senkenden Kolonne (25) und unterhalb der steigenden Kolonne (24) von Trägern (2) erstreckt, um je nach dem Fall die Entfernung aus der Backkammer (3, 3', 3'') des Trägers (2), der sich unten an der senkenden Kolonne (25) befindet, oder die direkte Entfernung eines Trägers (2), der von einem Zuförderer (38) oder einem Transferförderer (42, 42', 42'') eines vorgehenden Baukastens zugeführt und nicht vom Schöpfrad (23) übernommen worden ist, und zwar zufolge der Unterbrechung des Betriebs dieses letzten, zu erlauben.

2. Ofen zum kontinuierlichen Backen nach Anspruch 1, dadurch gekennzeichnet, daß eine Backkammer (3, 3', 3'') eines Baukastens (A, B, C) von einem im Querschnitt quaderförmigen Isoliermantel (11, 11', 11'') begrenzt ist, der, einerseits, zwei parallel zur Durchgangsachse (9) der Träger (2) durch den Ofen (1) verlaufende Seitenwände, respektive (12, 12', 12'') und (13, 13', 13'') und, andererseits, zwei senkrecht zur Achse (9) verlaufende und respektive die Einlaßöffnung (5, 5', 5'') und die Auslaßöffnung (6, 6', 6'') umfassende, senkrechte Querwände (14, 14', 14'') und (15, 15', 15'') umfaßt, wobei dieser Isoliermantel (11, 11', 11'') weiterhin am unteren Teil und an seinem oberen Ende durch einen Boden (16) und eine Decke (17), die vorzugsweise halbzylinderförmig sind, geschlossen ist.

3. Ofen zum kontinuierlichen Backen nach irgendeinem der Ansprüche 1 und 2, dadurch gekennzeichnet, daß jeder Baukasten (A, B, C) über Füße (18) oder eine geeignete Tragstruktur auf dem Boden ruht, die es erlaubt, unter diesen Baukästen (A, B, C) einen freien Raum (19) zum Anbringen eines Förderers (20) für den Rückkehr der Träger (2) zu einem automatisierten Produktionskreis freizulassen.

4. Ofen zum kontinuierlichen Backen nach irgendeinem der vorgehenden Ansprüche, dadurch gekennzeichnet, daß sich die Einlaß- (5, 5', 5'') und Auslaßöffnungen (6, 6', 6'') auf einer gleichen, im wesentlichen waagerechten Ebene im unteren Teil eines Baukastens (A, B, C) befinden.

5. Ofen zum kontinuierlichen Backen nach Anspruch 1, dadurch gekennzeichnet, daß ein Transferförderer (42, 42', 42'') aus einem Paar Ketten (44, 44', 44''; 45, 45', 45'') besteht, die Knaggen (46) tragen.

6. Ofen zum kontinuierlichen Backen nach Anspruch 1, dadurch gekennzeichnet, daß jeder Baukasten (A, B, C) Anschläge (47, 48) umfaßt, die geeignet sind, die Hineinführung in die Backkammer (3, 3', 3'') eines entweder von einem Zuförderer (38) oder von den Fördermitteln (4, 4') eines vorgehenden Baukastens (A, B) zugeförderten Trägers (2) zu begrenzen, um also die Übernahme dieses Trägers (2) vom Schöpfrad (23) zu erlauben, wobei diese Anschläge (47, 48) einziehbarer Art sind, was die direkte Übernahme dieses Trägers (2) vom Transferförderer (42, 42', 42'') zwecks dessen direkten Entfernung aus der Backkammer (3, 3', 3'') erlaubt.

7. Ofen zum kontinuierlichen Backen nach Anspruch 1, dadurch gekennzeichnet, daß der Zuförderer (38), die nacheinanderfolgenden Transferförderer (42, 42', 42'') und ein Abförderer (10) ineinandergreifen, um eine einwandfreie Hinüberführung der Träger (2) von einem Förderer auf den nächsten zu gewährleisten.

8. Ofen zum kontinuierlichen Backen nach irgendeinem der vorgehenden Ansprüche, dadurch gekennzeichnet, daß jeder Baukasten (A, B, C) Führungsmittel (53, 54; 55, 56, 57, 58; 59, 60; 61, 62) zum Kanalisieren der steigenden Kolonne (24) von Trägern (2) und der senkenden Kolonne (25) von Trägern (2), die auf dem Schöpfrad (23) angeordnet sind, umfaßt.

9. Ofen zum kontinuierlichen Backen nach Anspruch 2, dadurch gekennzeichnet, daß eine Seitenwand (13, 13', 13'') des die Backkammer (3, 3', 3'') definierenden Isoliermantels (11, 11', 11'') wenigstens eine Zugangstür (63), vorzugsweise zwei Zugangstüren (63, 64) umfaßt, die jeweils zu einer steigenden (24) oder senkenden Kolonne (25) von Trägern (2) führen.

10. Ofen zum kontinuierlichen Backen nach irgendeinem der vorgehenden Ansprüche, dadurch gekennzeichnet, daß jeder Baukasten (A, B, C) :
- ein individuelles, mit einer individuellen thermostatischen Regulierung versehenes Heizungssystem (65, 65', 65''),
- einen von einem individuellen Regelventil oder einem individuellen Dampfgenerator pro Baukasten gespeisten Dampfeinlaß (71, 71', 71''),
- und einen im oberen Teil dieses Baukastens (A, B, C) angeordneten Dampfbeschlagauslaß (72, 72', 72''), umfaßt.

11. Ofen zum kontinuierlichen Backen nach Ansprüchen 2, 9 und 10, dadurch gekennzeichnet, daß die individuellen Heizungssysteme (65, 65', 65'') zwischen der Seitenwand (12, 12', 12''), die derjenigen (13, 13', 13'') gegenüberliegt, die die Zugangstüren (63, 64) umfaßt, und dem Mechanismus der zum Teil aus dem Schöpfrad (23) bestehenden Fördermittel (4, 4', 4'') angeordnet sind.
